# EUROPÄISCHE PATENTSCHRIFT

(11) **EP 2 524 951 B1**
(45) Veröffentlichungstag und Bekanntmachung des Hinweises auf die Patenterteilung: **06.06.2018**
(21) Anmeldenummer: 12163140.2
(22) Anmeldetag: 04.04.2012
(51) Int. Cl.: C09J 5/02, B29C 65/48, B29C 65/50, B23K 26/32, B23K 35/02, B29C 65/00, B23K 26/342

(54) **Verfahren zur Herstellung eines Hybridbauteils**
Method for manufacturing of a hybrid component
Procédé de fabrication d'un composant hybride

(30) Priorität: 16.05.2011 DE 102011075926
(43) Veröffentlichungstag der Anmeldung: 21.11.2012
(73) Patentinhaber: Bayerische Motoren Werke Aktiengesellschaft, 80809 München (DE)
(72) Erfinder: Skrynecki, Nicolai, Dr., 83022 Rosenheim (DE)

(56) Entgegenhaltungen:
- EP-A2- 1 808 468
- DE-A1-102007 009 928
- US-A- 5 958 578

## Beschreibung

Die Erfindung betrifft ein Verfahren zur Herstellung von Hybridbauteilen oder Hybridbaugruppen gemäß dem Oberbegriff des unabhängigen Anspruchs 1.

Im heutigen Fahrzeugbau werden verschiedene Werkstoffe miteinander kombiniert, um das Fahrzeuggewicht auf ein Mindestmaß zu reduzieren und dabei gleichzeitig die benötigten Eigenschaften, beispielsweise bezüglich Festigkeit, zu erhalten. Dadurch können Karosseriestrukturen realisiert werden, die weiterhin gute Crash-Test-Ergebnisse liefern, wobei das Gewicht dieser Karosseriestrukturen wesentlich herabgesetzt werden kann.

Die DE 102007009928 A1 zeigt ein Verfahren zur Herstellung eines aus einer Kunststoffkomponente und aus einer Metallkomponente bestehenden Hybrid-Bauteils. Aus der Kunststoffkomponente und aus der Metallkomponente wird mittels einer zwischen der Kunststoffkomponente und der Metallkomponente angeordneten Haftvermittler durch Fügen unter Wärmeeinwirkung und Druck ein stoffschlüssiger Verbund hergestellt, wobei über die Metallkomponente ein Wärmeeintrag erfolgt.

In der EP 1808468 A2 ist der Einsatz von reaktiven Schmelzklebstoffen und Copolyamid Hybrid-Bauteilen beschrieben, die im Fahrzeugbau oder im Flugzeugbau zur Anwendung kommen.

Aus der US 5958578 ist eine Oberflächenbehandlung bekannt, insbesondere für Titan- und Aluminiumlegierungen, bei der eine Sol-Gel-Schicht gebildet wird, die kovalent an die Metalloberfläche gebunden ist, um eine starke, dauerhafte Klebung zwischen dem Metall und einem organischen Klebstoff zu erzeugen, ohne dass toxische Chemikalien verwendet werden.

Die Kombination verschiedener Werkstoffe hat jedoch den Nachteil, dass wenn Werkstoffe miteinander verbunden werden, die in der elektrochemischen Spannungsreihe weit voneinander entfernt sind, Korrosionserscheinungen auftreten können. Insbesondere die direkte Verbindung von kohlefaserverstärkten Kunststoffteilen mit metallischen Bauteilen oder Baugruppen, die aus Aluminium, Stahl oder Magnesium aufgebaut sind, führt zu Kontaktkorrosion an den Fügestellen. Dadurch wird der unedlere, metallische Werkstoff im Laufe der Zeit abgebaut bzw. oxidiert. Deshalb sind solche Verbindungen korrosionsgefährdet und können im Hinblick auf die Lebensdauer eines Fahrzeugs nicht zuverlässig eingesetzt werden.

Ausgehend von diesem Stand der Technik macht es sich die vorliegende Erfindung zur Aufgabe, ein Verfahren anzugeben, mit dem die Nachteile des Standes der Technik überwunden.

Diese Aufgabe wird durch ein Verfahren gemäß Anspruch 1 gelöst. Die abhängigen Ansprüche stellen vorteilhafte Ausführungen der Erfindung dar.

Zur Lösung dieser Aufgabe schlägt die Erfindung ein Verfahren zur Herstellung von Hybridbaugruppen bzw. Hybridbauteilen vor, mit den Schritten Bereitstellen eines ersten Bauteils, das zumindest aus einem ersten Werkstoff ausgebildet ist, wobei der Werkstoff des ersten Bauteils zumindest teilweise einen metallischen Werkstoff umfasst, Anordnung eines zweiten Bauteils an dem ersten Bauteil, wobei das zweite Bauteil zumindest aus einem zweiten Werkstoff, insbesondere einem kohlefaserverstärkten Werkstoff ausgebildet ist. Weiterhin ist zwischen dem ersten Bauteil und dem zweiten Bauteil eine korrosionshemmende Schicht aufgebracht wobei diese korrosionshemmende Schicht stoffschlüssig mit dem ersten Bauteil verbunden ist. Die korrosionshemmende Schicht wird mittels Laserauftragschweißens zumindest auf einen Abschnitt einer Oberfläche des ersten Bauteils aufgebracht die dem zweiten Bauteil zugewandt ist. Dies bietet den Vorteil, dass die aufgebrachte korrosionshemmende Schicht durch den stoffschlüssigen Verbund fest und beständig mit dem ersten Bauteil verbunden ist, so dass das Korrosionsrisiko minimiert wird. Da nur ein Abschnitt der Oberfläche beschichtet werden muss, in dem die Bauteile aneinander stoßen, kann die Verwendung des Schichtwerkstoffs reduziert werden.

Die korrosionshemmende Schicht kann zumindest teilweise aus Keramik und/oder einer metallischen Legierung, beispielsweise Zink, Titan, insbesondere TiAl6V4, ausgebildet sein.

Durch das Aufbringen der korrosionshemmenden Schicht mittels Laserauftragsschweißen kann die korrosionshemmende Schicht selbst in einzelnen Schichten sequenziell aufgetragen werden. Die Möglichkeit, über diesen Laserauftragsschweißprozess mehrere metallische Werkstoffe zu verarbeiten, ermöglicht zudem die Erzeugung von Gradienten, die sich infolge der Legierungszusammensetzung und Wärmeeinbringung hinsichtlich der gewünschten Eigenschaften, beispielsweise mechanische Eigenschaften wie Steifigkeit, Festigkeit und/oder deren Dichte einstellen lassen. Der Werkstoff des ersten Bauteils ist zumindest teilweise metallisch beispielsweise Stahl, eine Aluminiumlegierung, insbesondere AlSi10, AlSi0,5, AlMg3 und/oder AlSi10Mg umfassen. Zusätzlich oder alternativ können die Bauteile in einem Klebeschritt mittels Klebstoff zusammen gefügt werden.

Das erfindungsgemäße Verfahren ist hinsichtlich seiner Einsetzbarkeit in der industriellen Fertigung vollkommen flexibel und investitionsarm. Dadurch können auf besonders einfache Weise von der Standardfertigung abweichende Derivate schnell und kostengünstig gefertigt werden. Darüber hinaus lassen sich durch additive Fertigung die verwendeten Werkstoffe bedarfsgerecht einsetzen und erzeugen weniger Abfall als konventionelle Fertigungsverfahren, wie beispielsweise spanabhebende Fertigungsverfahren.

In einem weiteren Aspekt wird gezeigt eine Hybridbaugruppe oder ein Hybridbauteil mit einem ersten Bauteil, das zumindest aus einem ersten Werkstoff ausgebildet ist, einem zweiten Bauteil, das zumindest aus einem zweiten Werkstoff ausgebildet ist, wobei sich der erste Werkstoff von dem zweiten Werkstoff unterscheidet und einer korrosionshemmenden Schicht. Die korrosionshemmende Schicht kann zwischen den beiden Bauteilen angeordnet sein. Dabei können die Bauteile über die korrosionshemmende Schicht miteinander in Verbindung stehen und/oder zumindest teilweise elektrisch voneinander isoliert sein. Im Sinne der Erfindung ist der Begriff "teilweise elektrisch isoliert" so aufzufassen, dass die Isolationsschicht nur einen Korrosionsschutz bis zu einer bestimmten elektrischen Spannung bietet. Mit anderen Worten: Durch die Wahl der Werkstoffe der einzelnen Bauteile ergibt sich aus der Kombination dieser Werkstoffe zwischen den Bauteilen ein elektrisches Potential. Dieses Potential würde ohne Vorsehen der Isolationsschicht zu Korrosionserscheinungen führen. In Abhängigkeit der Werkstoffpaarungen wird folglich die korrosionshemmende Schicht dimensioniert. Dabei wird ein entsprechender Werkstoff für die Schicht oder eine entsprechende Werkstoffkombination für die Schicht und eine Dicke der Schicht, die an die Werkstoffpaarung angepasst sind, bestimmt. Bezüglich höherer Spannungsdifferenzen ist dann die Isolationsschicht jedoch ungeeignet, so dass in dem Fall Korrosionserscheinungen auftreten können.

Weiterhin kann das zweite Bauteil aus einem kohlefaserverstärkten Kunststoff ausgebildet sein.

Ferner kann das erste Bauteil zumindest teilweise aus einem metallischen Werkstoff, beispielsweise Stahl, einer Aluminiumlegierung, insbesondere aus AlSi10, AlSi0,5, AlMg3 und/oder AlSi10Mg ausgebildet sein.

Weiterhin kann die korrosionshemmende Schicht zumindest teilweise aus Keramik oder einer speziellen metallischen Legierung, beispielsweise aus Zink und/oder Titan, insbesondere TiAl6V4, ausgebildet sein.

Weiterhin kann die korrosionshemmende Schicht mittels Laserauftragschweißen zumindest auf einen Abschnitt einer Oberfläche des ersten Bauteils aufgebracht werden, die dem zweiten Bauteil zugewandt ist.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigt in schematischer Darstellung:

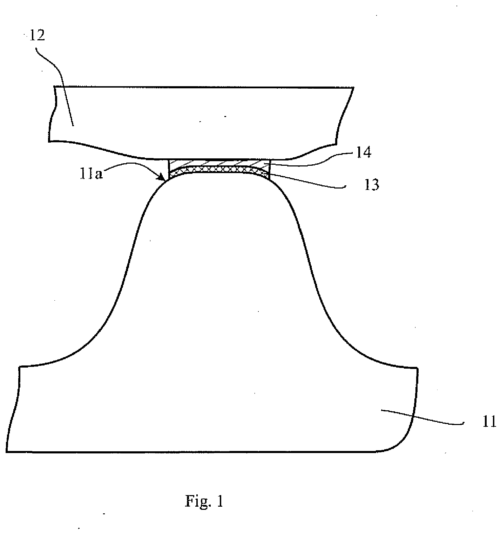

- Figur 1: den prinzipiellen Aufbau eines erfindungsgemäßen Hybridbauteils bzw. einer erfindungsgemäßen Hybridbaugruppe in einer Seitenansicht.

In Figur 1 ist ein erstes Bauteil 11 abgebildet, das aus einem metallischen Werkstoff, beispielsweise aus einer Aluminiumlegierung aufgebaut ist. Im Fahrzeugbau kann ein solches erstes Bauteil 11 insbesondere ein Fahrzeugchassis oder ein Rahmen eines Fahrgestells sein. Die mittlere Erhebung im ersten Bauteil 11 kann beispielsweise eine Aufnahme für ein Federbein darstellen. Als Werkstoff für das erste Bauteil 11 eignen sich insbesondere Aluminium-Silizium AlSi0,3, Aluminium-Magnesium AlMg3 und/oder AlSi10. In einem Abschnitt der Oberfläche des ersten Bauteils 11 ist eine korrosionsschützende Schicht 13 aufgebracht. Zur besseren Darstellung ist diese in Figur 1 durch eine karierte Schraffierung kenntlich gemacht. Auf dieser korrosionsschützenden Schicht 13 ist eine Schicht Klebstoff 14 angeordnet, mit dem das erste Bauteil 11 mit einem zweiten Bauteil 12 zu einer Hybridbaugruppe oder einem Hybridbauteil gefügt wird.

Das zweite Bauteil 12 kann dabei als Faserverbundbauteil ausgeführt sein, insbesondere als kohlefaserverstärktes Kunststoffbauteil. Es ergibt sich der in Figur 1 von unten nach oben dargestellte Aufbau mit einem Gussbauteil 11 aus einer Aluminiumlegierung als Substrat einer in einem Laserauftragsschweißprozess aufgetragenen Isolationsschicht 13, einer Klebstoffschicht 14 und einem Faserverbundbauteil 12. Die korrosionshemmende Schicht 13 bzw. die Isolationsschicht 13 weist eine Dicke im Bereich von 0,3 mm bis zu 1 mm auf. Die Klebstoffschicht weist eine Dicke von ca. 1 mm auf. Erfindungsgemäß kann, wie in Figur 1 dargestellt, die kritische Werkstoffpaarung von Aluminium mit kohlefaserverstärkten Bauteilen realisiert werden. Bei dem zweiten Bauteil 12 kann es sich um eine Karosseriestruktur oder ein Verkleidungsbauteil des Fahrzeugs handeln.

Wie bereits oben erwähnt, wird die korrosionshemmende Schicht 13 bzw. die Isolationsschicht 13 mit einem Laserauftragsschweißverfahren erzeugt. Dabei wird in einem Abschnitt der Oberfläche 11a des ersten Bauteils 11 ein Oberflächenauftrag erzeugt, durch Aufschmelzen des Werkstoffs des ersten Bauteils 11 und gleichzeitigen Aufbringen eines weiteren Materials. Dieses zusätzliche Material wird in Pulverform an den aufgeschmolzenen Bereich herangeführt mit Hilfe einer Schlepp- oder Koaxial-Düse. Alternativ zu dem Materialpulver können auch keramische pulverförmige Werkstoffe verwendet werden. Die korrosionshemmende Schicht 13 kann wahlweise in einem Schritt durch Erzeugung einer einzigen Schicht aufgetragen werden oder in einem Schichtbauverfahren mit mehreren übereinanderliegenden Schichten generiert werden. Durch Verwendung verschiedener Materialien können in beiden Verfahrensalternativen Gradienten, beispielsweise aus Titan und Aluminium, erzeugt werden. In beiden Fällen geht die Isolationsschicht 13 bzw. die korrosionshemmende Schicht 13 eine stoffschlüssige Verbindung mit der Oberfläche des ersten Bauteils 11 ein.

In Figur 1 ist ersichtlich, dass die korrosionshemmende Schicht 13 nur in vorbestimmten Bereichen bzw. Abschnitten der Oberfläche erzeugt wird. Ein solcher Abschnitt der Oberfläche 11a entspricht in etwa der Fläche, die als Kontaktfläche zwischen dem ersten und dem zweiten Bauteil entstehen würde, wenn diese direkt in berührendem Kontakt zur Auflage kämen.

Die Erfindung bietet auch dann einen Korrosionsschutz, wenn bei dem Kohlenstofffaserbauteil Kohlenstofffasern aus der Harzmatrix herausragen. Dies tritt gelegentlich aufgrund von Fertigungungenauigkeiten des Kohlfaserbauteil auf. Selbst wenn die Fasern aus der Matrix herausragen und den Klebstoff vollständig durchstoßen, treffen sie nicht auf das erste Bauteil 11 auf, sondern auf die korrosionshemmende Schicht 13. Dadurch wird ein direkter Kontakt vermieden, so dass keine Korrosion auftritt.

## Patentansprüche

1. Verfahren zur Herstellung von Hybridbaugruppen oder Hybrid-bauteilen, mit den Schritten:
- Bereitstellen eines ersten Bauteils (11), das zumindest aus einem ersten Werkstoff ausgebildet ist, wobei der Werkstoff des ersten Bauteils (11) zumindest teilweise einen metallischen Werkstoff, insbesondere Stahl oder eine Aluminiumlegierung, insbesondere aus AlSi10, Al Si0,5, AlMg3 und /oder AlSi10Mg umfasst.
- Anordnung eines zweiten Bauteils (12) an dem ersten Bauteil (11), wobei das zweite Bauteil aus zumindest einem zweiten Werkstoff, insbesondere einem kohlefaserverstärkten Werkstoff ausgebildet ist, **dadurch gekennzeichnet, dass**
zwischen dem ersten Bauteil (11) und dem zweiten Bauteil (12) eine korrosionshemmende Schicht (13) aufgebracht wird, wobei diese korrosionshemmende Schicht (13) mittels Laserauftragsschweißen zumindest auf einen Abschnitt einer Oberfläche (11a) des ersten Bauteils (11) aufgebracht wird, die dem zweiten Bauteil (12) zugewandt ist und stoffschlüssig mit dem ersten Bauteil verbunden ist.

2. Verfahren nach Anspruch 1, **dadurch gekennzeichnet, dass** die korrosionshemmende Schicht (13) zumindest teilweise Keramik, Zink, Titan und/oder eine Titanlegierung, insbesondere TiAl6V4 umfasst.

3. Verfahren nach einem der vorhergehenden Ansprüche, **dadurch gekennzeichnet, dass**
die Bauteile (11, 12) in einem Klebeschritt mittels Klebstoff (14) gefügt werden.

## Claims

1. A method for producing hybrid assemblies or hybrid components, having the following steps:
- providing a first component (11) which is formed at least from a first material, wherein the material of the first component (11) at least partially comprises a metallic material, especially steel or an aluminium alloy, especially consisting of AlSi10, AlSi0,5, AIMg3 and/or AlSi10Mg,
- arranging a second component (12) on the first component (11), wherein the second component is formed from at least a second material, especially a carbon fibre-reinforced material,
**characterised in that**
a corrosion-inhibiting layer (13) is applied between the first component (11) and the second component (12), this corrosion-inhibiting layer (13) being applied by means of laser cladding at least to a portion of a surface (11a) of the first component (11) which faces the second component (12) and is connected to the first component by a material-formed bond.

2. A method according to Claim 1, **characterised in that** the corrosion-inhibiting layer (13) comprises at least in part ceramic, zinc, titanium and/or a titanium alloy, in particular TiAl6V4.

3. A method according to one of the preceding claims,
**characterised in that** the components (11, 12) are joined by means of adhesive (14) in a gluing step.

## Revendications

1. Procédé de fabrication d'ensembles hybrides ou de composants hybrides comprenant des étapes consistant à :
- se procurer un premier composant (11) qui est réalisé en au moins un premier matériau, le matériau du premier composant (11) renfermant au moins partiellement un composé métallique, en particulier de l'acier ou un alliage d'aluminium, en particulier un alliage AlSi10, AlSi0,5, AlMg3 et/ou AlSi10Mg,
- positionner un second composant (12) sur le premier composant (11), le second composant étant réalisé en au moins un second matériau, en particulier un matériau renforcé par des fibres de carbone,
**caractérisé en ce qu'**
entre le premier composant (11) et le second composant (12) est appliquée une couche anticorrosion (13), cette couche anticorrosion (13) étant appliquée par soudage, par rechargement au laser sur au moins un segment d'une surface (11a) du premier composant (11) qui est tournée vers le second composant (12) et reliée par une liaison par la matière avec le premier composant.

2. Procédé conforme à la revendication 1,
**caractérisé en ce que**
la couche anticorrosion (13) renferme au moins partiellement une céramique, du zinc, du titane et/ou un alliage de titane, en particulier l'alliage TiAl6V4.

3. Procédé conforme à l'une des revendications précédentes,
**caractérisé en ce que**
les composants (11, 12) sont assemblés au moyen de colle (14) lors d'une étape de collage.
